# EUROPÄISCHE PATENTSCHRIFT

(11) **EP 1 302 828 B1**
(45) Veröffentlichungstag und Bekanntmachung des Hinweises auf die Patenterteilung: **23.01.2008**
(21) Anmeldenummer: 02022114.9
(22) Anmeldetag: 02.10.2002
(51) Int. Cl.: G05B 19/4097, B05B 13/04

(54) **Verfahren und Programmsteuersystem zur Steuerung einer Beschichtungsanlage**
Program control system and method for controlling a coating plant
Système de commande par programme et procédé de commande d'une installation de peinture

(30) Priorität: 15.10.2001 DE 10150826
(43) Veröffentlichungstag der Anmeldung: 16.04.2003
(73) Patentinhaber: Dürr Systems GmbH, 70435 Stuttgart (DE)
(72) Erfinder: Gummlich, Harald, 71643 Ludwigsburg (DE); Jost, Jürgen, 71726 Benningen (DE)
(74) Vertreter: Heusler, Wolfgang

(56) Entgegenhaltungen:
- WO-A-89/06181
- US-A- 5 521 477
- US-A- 5 645 884
- US-A- 5 814 375
- PATENT ABSTRACTS OF JAPAN Bd. 2000, Nr. 03, 30. März 2000 (2000-03-30) & JP 11 333339 A (KAWASAKI HEAVY IND LTD), 7. Dezember 1999 (1999-12-07)

## Beschreibung

Die Erfindung betrifft ein Verfahren und ein Programmsteuersystem zur Steuerung einer Beschichtungsanlage für die Serienbeschichtung von gleichen oder unterschiedlichen Werkstücken gemäß dem Oberbegriff der unabhängigen Patentansprüche. Insbesondre handelt es sich um ein rechnergestütztes Expertensystem für die Generierung der Lackierbahnen zur Beschichtung von Kraftfahrzeugkarossen mit Lackierrobotern.

Bei der Erzeugung der komplex geformten Lackbahnen auf Fahrzeugkarossen soll der Farbauftrag möglichst gleichmäßig und vollständig mit geringstem Produktions- und Materialaufwand erfolgen. Die Generierung der dafür erforderlichen Maschinen-, insbesondere Roboterbewegungsbahnen kann entweder nach dem Teach-in-Verfahren erfolgen, wofür aber hochqualifiziertes Fachpersonal erforderlich ist, oder alternativ softwaregestützt aufgrund der vorhandenen Informationen von hochqualifizierten Programmierern errechnet werden. Die "manuelle" Bahngenerierung am Rechner ist nicht nur sehr aufwendig, sondern wegen der vielen zu berücksichtigenden Parameter auch schwierig und entsprechend fehlerbehaftet. In der Regel müssen nach zunächst probeweiser Beschichtung einzelner Karossen beispielsweise als Schichtdickenunterschiede sichtbare Fehler in nachfolgenden manuellen Optimierungsarbeiten durch Variierung der Zerstäuber- und Bahnparameter korrigiert und die Ergebnisse dann erneut getestet werden, bis sich schließlich einwandfreie Qualität ergibt. Erschwerend kommen subjektive Faktoren wie Qualifizierung und Erfahrung der Programmierer hinzu. Mit den ständig steigenden Anforderungen an die Produktivität wird der hohe Arbeits- und Zeitaufwand dieser bekannten manuellen Verfahren zunehmend unbefriedigend.

Verfahren zur Bewegungssteuerung von Anlagen für die Beschichtung von Fahrzeugkarossen sind u.a. aus WO 98/06 181, US 5 645 884, JP 11-333339, EP 0 298 313, WO 93/18860, DE 43 39 748 und EP 0 829 788 bekannt. Nach der DE 101 20 272 wird aufgrund einer Simulierung des Beschichtungsvorgangs einschließlich der Bewegungsabläufe am Rechner die für den späteren tatsächlichen Beschichtungsvorgang benötigte Materialmenge vorherbestimmt.

WO 98/06181 offenbart ein Verfahren zur Reparaturlackierung von bereits lackierten Fahrzeugen bei dem ein Lackierroboter mittels vorprogrammierten Betriebsdaten gesteuert wird.

US 5 645 884 beschreibt ein Verfahren zur Steuerung einer Beschichtungsanlage für die Serienlackierung von Werkstücken mit unterschiedlich geformten Teilbereichen.

JP 11-333339 offenbart ein System zur automatischen Erzeugung von Steuerdaten für einen Roboter, bei dem Informationen über ein jeweils zu beschichtendes Werkstück als CAD-file gespeichert werden.

Der Erfindung liegt die Aufgabe zugrunde, ein Verfahren bzw. ein Programmsteuersystem anzugeben, die das Generieren der für höchstmögliche Beschichtungsqualität jeweils erforderlichen Beschichtungsbahnen schneller, einfacher und zuverlässiger ermöglichen als bisher.

Diese Aufgabe wird durch die Merkmale der Patentansprüche gelöst.

Durch die Erfindung wird im Gegensatz zu den "manuellen" bekannten Methoden eine vollautomatische Generierung und Prüfung der Lackierbahnen ermöglicht und dadurch u.a. der Zeitaufwand für Produktionsvorbereitung, Produktionsbegleitung und Fehlersuche deutlich reduziert. Aufwendige regelmäßige Versuche werden auf ein Mindestmaß einmaliger Situationsstudien reduziert. Durch Anwendung standardisierter und nur einmalig praktisch optimierter Prozessvorschriften erhält die Ergebnisaussage eine hohe Wahrheitskraft. Die Auswirkung von Parametervariationen auf das Prozessergebnis können einfach und entsprechend kostengünstig simuliert und dargestellt werden. Qualitätsziele und Produktivitätsziele können durch die umfassende Einbeziehung aller Prozesseinflüsse nach Ursache und Wirkung logisch optimiert werden. Es ergibt sich Unabhängigkeit von subjektiven Einflüssen und Abhängigkeiten bei der Abwicklung von Routineaufgaben.

Ferner ermöglicht das Konzept des Expertensystems auf einfache Weise einen stetigen Ausbau des automatisierten Expertenwissens. Der Gesamtprozess kann wesentlich schneller als bisher an Prozessänderungen angepasst werden (z.B. an verändertes Lackmaterial). Optimierungsprozesse können durch einen virtuellen Variantenvergleich beschleunigt werden.

Die Erfindung kann vorrangig und besonders vorteilhaft bei der Produktionsvorbereitung für die Serienlackierung von Werkstücken sehr komplexer Bauformen wie namentlich von Fahrzeugkarossen eingesetzt werden. Hierbei kann die laufende Produktion vorteilhaft optimiert werden. Potenzielle und vermutete Fehlersituationen sind mit der damit verbundenen Ergebniserwartung als Simulation darstellbar. Durch Variantensimulationen können die jeweiligen Produktionsumstände dargestellt und anschließend durch Auswahl der geeigneten Variante optimiert werden.

Lokalisierung und Behandlung unerwünschter Ergebnisabweichungen, Bewertung der Auswirkungen von Parameterabweichungen auf das Prozessergebnis durch Simulation und Visualisierung, Optimierung hinsichtlich Wirtschaftlichkeit (Prozess- und Materialaufwand) und Qualitätsergebnis (geringste Soll-Ist-Abweichungen im Schichtdickenaufbau) werden auf einfache Weise durch Bereitstellung interaktiver Softwaretools ermöglicht.

Am Beispiel einer Beschichtungsanlage für die Serienbeschichtung von Fahrzeugkarossen mit Robotern wird die Erfindung näher erläutert. In der Zeichnung zeigen
- Fig. 1: das Schema zur automatischen Generierung der Lackierbahnen und deren Prüfung;
- Fig. 2: ein Schema zur Erläuterung der erfindungsgemäß bereitgestellten Lackierregeln;
- Fig. 3: ein Schema zur Erläuterung der Karossendatenanalysierung und
- Fig. 4: ein Schema zur Erläuterung der Bahnerzeugung aufgrund der Karossendatenanalyse und der Lackierregeln.

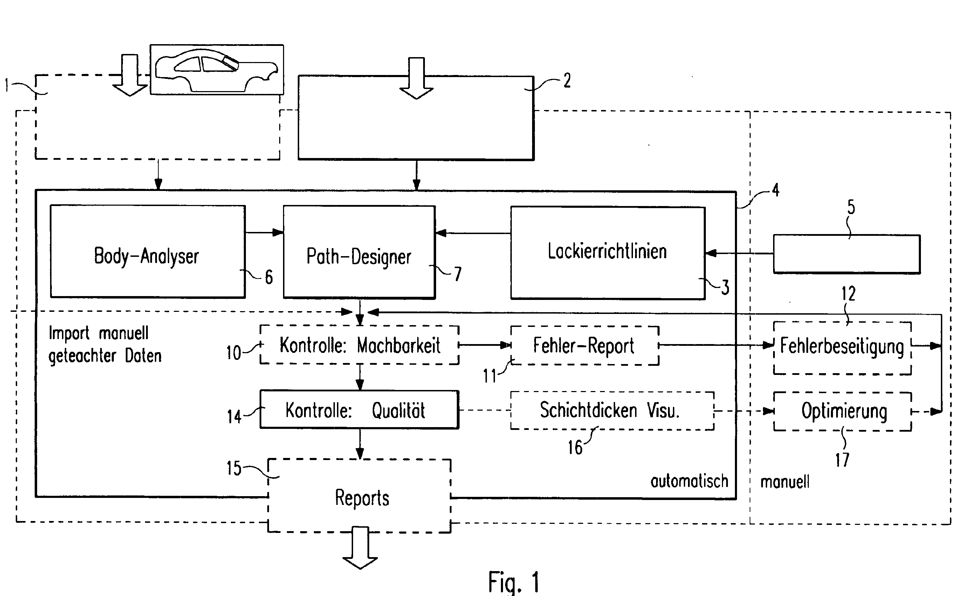

Gemäß dem in Fig. 1 dargestellten Schema sind in einem Werkstückdatenspeicher 1 in an sich bekannter und üblicher Weise die geometrischen und ggf. sonstige Informationen über die zu lackierenden Karossen in Form von CAD-Files gespeichert. Ferner enthält der Datenspeicher 1 eine Datei mit Analysestrategiedaten, die bei der später beschriebenen Datenanalysierung verwendet werden. Ein weiterer Datenspeicher 2 enthält Informationen und Steuerdaten über den Beschichtungsprozess, die insbesondere den Aufbau der jeweiligen Sprühkabine (Zelle), die verwendeten Roboter und Zerstäuber sowie den Prozessablauf betreffen.

Von den Speichern 1 und 2 wird eine automatisch arbeitende Programmierungseinheit 4 gespeist, die zur selbsttätigen Generierung und Verifizierung der jeweiligen Lackierbahnparameter aufgrund der Karossendaten im Speicher 1 und der Prozessvorgaben insbesondere aus dem Speicher 2 sowie aufgrund standardisierter Lackierrichtlinien (Regeln oder Algorithmen) dient, die in einer Regeldatenbank 3 gespeichert sind. Diese Datenbank kann von außerhalb der Einheit 4 von dem bei 5 dargestellten Lackierregel-Editor gesteuert werden.

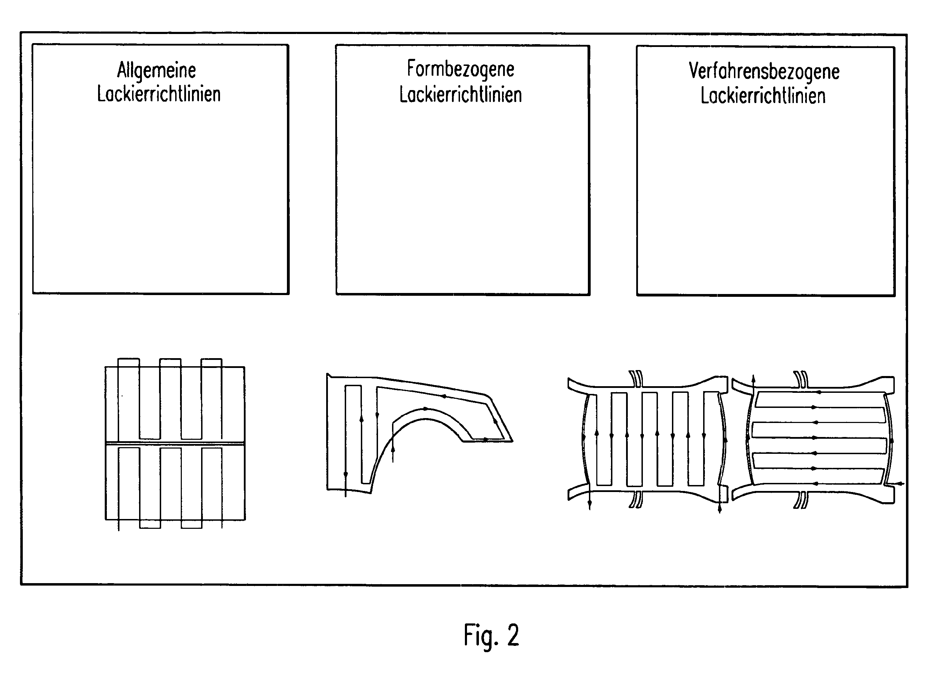

Bei dem hier betrachteten Beispiel kann der Inhalt der Regeldatenbank 3 dem in Fig. 2 dargestellten Schema entsprechen. Es beruht auf der Erkenntnis, dass die komplex und an sich je nach Fahrzeugtyp unterschiedlich geformten Karossen jeweils spezielle typische Teilbereiche wie Dach, Türen, Kotflügel, Säulen, Holme usw. mit den ggf. unterschiedlichen Karossen gemeinsamen Merkmalen haben, die jeweils eigene Lackierrichtlinien erfordern.

Zunächst gibt es allgemeine Lackierrichtlinien, nach denen Großflächen (z.B. Dächer), Schmalflächen, Kanten usw. jeweils andere Bahnmuster benötigen und jeweils andere Sprühstrahl- oder "Brush"-Konzepte erforderlich sind (als "Brush" werden üblicherweise Lackierparameter wie Farbmenge, Sprühkegelformung usw. bezeichnet). Zu den allgemeinen Lackierrichtlinien gehören auch zweckmäßige Default-Regeln (automatische Parameterwahl). Ferner gibt es formbezogene Lackierrichtlinien für spezielle Lackierbahnformen an Kotflügeln, Säulen, Holmen, Türen usw. ebenfalls mit zugehörigen Default-Regeln. Schließlich gibt es verschiedene verfahrensbezogene Lackierrichtlinien, die u.a. Vorzugsrichtung der Zerstäuberbewegungen, die jeweiligen Roboterzuordnungen, die Bewegungsorientierung der Zerstäuber bezüglich der Karossenförderung, Verkettungskonzepte usw. bestimmen. Auch hierzu gehören spezielle Default-Regeln.

Gemäß einem zweckmäßigen Realisierungskonzept können die hier betrachteten Lackierrichtlinien die folgende digitale und strukturierte Form haben:
1. Allgemeine Beschichtungskonzepte:
   - Allgemeines Auftragskonzept an Großflächen (Mehrfachbeschichtung, Bahnanreihung, Toleranzen)
   - Beschichtungskonzept an Längs- und Quer-Außenkanten
   - Beschichtungskonzept an Modul-Stoßstellen
   - Beschichtungskonzept an Stoßstellen zwischen Karosserieteilen
   - Allgemeines Brush-Konzept, Brush-Staffelung, Schmalflächen-Beschichtung, Brush-Auswahlkriterien, Spritzbilder
   - Default-Großflächenkonzept, Default-Schmalflächenkonzept
2. Formbezogene Beschichtungskonzepte
   - Kotflügel, Säulen, Holme, Schürzen, Schweller
   - Default-Behandlungskonzepte
3. Technologiebezogene Beschichtungskonzepte
   - Vorzugs-Applikationsrichtungen
   - Beschichtungs-Modularisierung ("Welcher Roboter macht was?")
   - Beschichtungs-Verkettung ("In welcher Reihenfolge werden welche Module abgearbeitet?")
   - Zerstäuberabhängige Konzepte (Elektrostatische Zerstäuber, Luftzerstäuber)

Damit die verschiedenen gespeicherten Lackierrichtlinien automatisch den jeweiligen typischen Teilbereichen der Karossen zugeordnet werden können, für die sie jeweils bestimmt sind, werden die im Speicher 1 enthaltenen Karossendaten zur Identifizierung der einzelnen Karossenteilbereiche und zur Ermittlung der benötigten Richtlinien analysiert. Dies geschieht selbsttätig in der in der Einheit 4 enthaltenen Analysiereinrichtung 6.

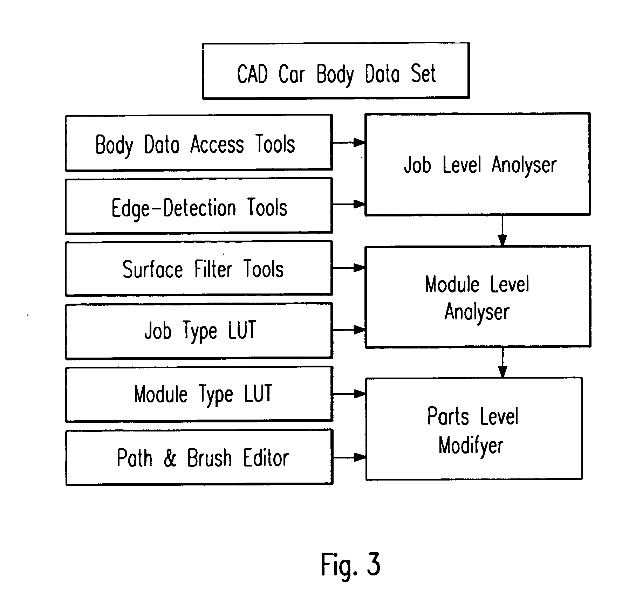

Wie in Fig. 3 dargestellt ist, erfolgt die Analyse durch Vorverarbeitung der Karossendaten aus dem Speicher 1 (Fig. 1) in drei Schritten. Im ersten Schritt ("Job Level") erfolgt eine automatische Analyse der Karosse zur Findung der jeweils erforderlichen Beschichtungsaufgaben ("Jobs") zum Lackieren der typischen Teilbereiche der jeweiligen Karosse wie z.B. Dachfläche (einschließlich Holmen, ohne Säulen), Frontfläche (Motorhaube, Front-Grill-Fläche), Heckfläche (Heckklappe, Heckschürze) und Seitenflächen rechts/links (Kotflügel vorne/hinten, Türen, Säulen, Holme, Schweller). Dies geschieht mit Hilfe geeigneter Softwaretools. Access-Tools ermöglichen den Zugang zu den Karossendaten, während Edge-Detection-Tools für die Identifizierung der Daten der jeweiligen Teilbereiche durch Feststellung zwei- und dreidimensionaler markanter Karossenstellen wie z.B: Außenkanten oder Aussparflächen sorgt. Im zweiten Schritt ("Module Level") werden die erwähnten Jobs automatisch zur Findung standardisierter Lackier-Module, d.h. abgeschlossene Lackierbahn-Softwarepakete für die jeweiligen Jobs analysiert. Hierbei helfen Surface-Filter-Tools, d.h. dreidimensionale Oberflächendatenfilter beispielsweise bezüglich Glättung an Sicken, Design-Kanten, Markierungslöchern, Leisten, Tankeinfüllstutzen usw. und Tools in Form von Nachschlagtabellen (LUT) für den jeweiligen Jobtyp. Die Vorgänge dieser beiden "Job Levels" können als Karossenbilder sichtbar dargestellt werden. Im dritten Schritt ("Parts Level") erfolgt die automatische Analyse der oben erwähnten, im zweiten Schritt gefundenen Module zur Findung von differenziert zu behandelnden Teilflächen, die eine entsprechende Modifizierung erfordern, beispielsweise Brush-Variationen bei fest vorgegebenen Lackierbahnen oder Modulen an kantenlosen Teilen oder zur Fehlerkorrektur mit Hilfe eines geeigneten Brush-Editors. Als weitere Softwaretools dienen Nachschlagetabellen für den Modultyp.

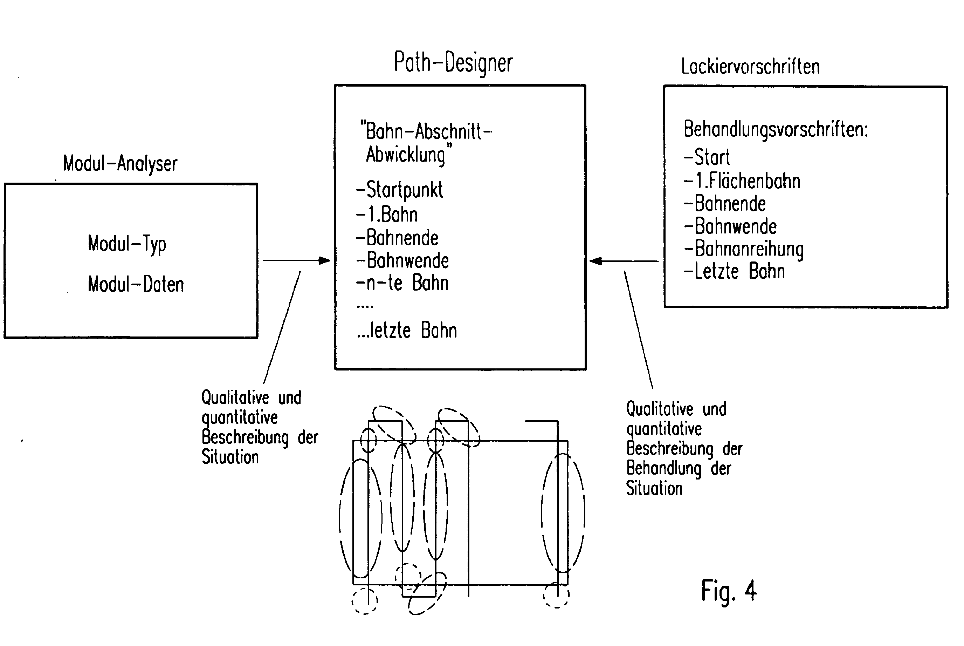

Aufgrund der Analyseergebnisse werden unter Verwendung der jeweils gewählten Beschichtungssteuerregeln, also der oben beschriebenen Lackierrichtlinien in der in Fig. 1 als "Path-Designer" bezeichneten Bahnerzeugungseinrichtung 7 selbsttätig die Bahnsteuerprogramme für die einzelnen Teilbereiche der Karosse erzeugt und zu dem Gesamtsteuerprogramm zusammengefügt. Wie dies im Einzelnen geschieht, ist schematisch in Fig. 4 veranschaulicht.

Vorteilhaft kann aufgrund der Erfindung das von der Einrichtung 7 erzeugte Steuerprogramm vor Beginn des Beschichtungsbetriebes selbsttätig in Hinblick darauf überprüft werden, ob es bei der Beschichtung problemlos ausführbar ist. Diese in Fig. 1 bei 10 dargestellte Kontrolle der "Machbarkeit" des Prozessablaufs erfolgt automatisch unter Berücksichtigung der relevanten Parameter der Anlagenkomponenten wie z.B. der Roboterreichweite, der Kollisionsmöglichkeiten usw. Wenn hierbei ein Fehler festgestellt wird, kann ebenfalls automatisch ein Fehlerreport erstellt werden, der extern zur Fehlerbeseitigung benutzt wird, wie bei 11 und 12 dargestellt ist. Ferner kann vorteilhaft vor Beginn des Beschichtungsbetriebes die sich aufgrund des erzeugten Steuerprogramms ergebende Beschichtungsqualität selbsttätig beispielsweise hinsichtlich der Anzahl der Beschichtungsbahnen und der Schichtdicke überprüft werden. Diese automatische Qualitätskontrolle ist in Fig. 1 bei 14 dargestellt. Bei 15 werden entsprechende Reports mit den von der Einheit 4 erzeugten Programmdaten ausgegeben. Durch die Qualitätskontrolle simulierte Schichtdickenwerte können bei 16 visualisiert und bei 17 extern optimiert werden.

Bei der beschriebenen virtuellen Machbarkeits- und Qualitätsprüfung kann zunächst anhand einer bildlichen Darstellung der generierten Bahn auf dem betreffenden Karossenbereich (z.B. Dach) überprüft werden, ob alle zu beschichtenden Teile innerhalb des dafür vorbestimmten Zeitfensters erreicht werden. Im Bedarfsfall können Fehler mit geeigneten Tools korrigiert und die einzelnen Softwaremodule modifiziert werden. Sodann kann ebenfalls mit bildlicher Darstellung durch dreidimensionale Ablaufsimulation eine Kollisionsüberprüfung und bei Bedarf eine Fehlerbehandlung mit geeigneten Tools durchgeführt werden. Zur virtuellen Qualitätsprüfung erfolgen schließlich anhand bildlicher Darstellung der Beschichtungsbahnen zweckmäßig auf der vollständigen Karosse eine Überprüfung der Beschichtungszahl, Schichtdickensimulationen und bei Bedarf Optimierungen unter Verwendung geeigneter Tools.

Beispielsweise kann die virtuelle, den tatsächlichen Beschichtungsbetrieb simulierende Kontrolle zur Fehlererkennung und Prozessoptimierung dem folgenden Schema entsprechen:
1. Machbarkeit im Sinne von Erreichbarkeit
   - Kann er Roboter die zugewiesenen Orte immer zum Bedarfszeitpunkt und in einem bestimmten Zeitfenster erreichen?
      >> Markierung nicht/zeitlich limitiert erreichbarer Regionen
2. Machbarkeit im Sinne von Schadensausschluss (Kollision oder Berührung) und Risikominimierung (Annäherung)
   - Ausschluss der Kollision/unvertretbare Annäherung Roboter (bzw. Zerstäuber)-Karosse
   - Ausschluss der Kollision/unvertretbare Annäherung Roboter (bzw. Zerstäuber)-Roboter (bzw. Zerstäuber)
   - Ausschluss der Kollision/unvertretbare Annäherung Roboter (bzw. Zerstäuber) - Kabinenteile
      >> 3D-Prozesssimulation mit beliebigen Betrachter-Standpunkten maximal/real/slow-Motion, Pause, Zoom, 3D-Abstandsmessung (ggf. Kollisions-Detektion), Prozess-Editor
3. Qualitätskontrolle im Sinne Schichtdickengleichmäßigkeit
   - Schichtdickensimulation im Sinne "Anzahl der Applikationsschichten"
   - Schichtdickensimulation im Sinne "Materialverteilung mit Beachtung der Brush-Bilder"
      >> Karosse mit Falschfarben-Texturierung
4. Produktivitätskontrolle und Wirtschaftlichkeit
   - Zeit-Gesamtbedarf
   - Aktive Produktionszeit, Zeit für Hilfs- und Leer-Funktionen
   - Materialbedarf
      >> Reports, Timing Charts

## Patentansprüche

1. Verfahren zur Steuerung einer Beschichtungsanlage für die Serienbeschichtung von unterschiedlichen Werkstücken mit unterschiedlich geformten typischen Teilbereichen mit den unterschiedlichen Werkstücken gemeinsamen Merkmalen,
bei dem die Bewegungsbahnen einer Beschichtungsvorrichtung in Abhängigkeit von in einer Werkstückdatei (1) gespeicherten Informationen über das Werkstück errechnet werden und die Beschichtungsvorrichtung während des Beschichtungsbetriebes durch die aufgrund der Berechnung erzeugten Bewegungsprogramme (15) gesteuert wird, **dadurch gekennzeichnet, dass**
den einzelnen, typischen Teilbereichen der Werkstücke jeweils zugeordnete Beschichtungssteuerregeln (3) gespeichert werden; die gespeicherten Werkstückdaten (1) selbsttätig zur Identifizierung der jeweiligen Informationen über die einzelnen Teilbereiche analysiert werden;
für jeden Teilbereich aufgrund der Analyse der Werkstückdaten (1) aus den gespeicherten Steuerregeln (3) selbsttätig die jeweils zu verwendenden Steuerregeln einschließlich der Sprühkegelformung der Beschichtungsvorrichtung ausgewählt wird;
aufgrund der ausgewählten Steuerregeln (3) und der gespeicherten Werkstückdaten (1) selbsttätig die zumindest den Bewegungsverlauf bestimmenden Bahnsteuerprogramme (7) für die einzelnen Teilbereiche erzeugt werden; und
die einzelnen Bahnsteuerprogramme selbsttätig zu dem Gesamtsteuerprogramm (15) zusammengefügt werden.

2. Verfahren nach Anspruch 1, **dadurch gekennzeichnet, dass** neben den Bewegungssteuerregeln zusätzlich Funktionssteuerregeln für die Bahnsteuerung in Abhängigkeit von den typischen Teilbereichen gespeichert und ausgewählt werden.

3. Verfahren nach Anspruch 1 oder 2, **dadurch gekennzeichnet, dass** der Beschichtungsprozess vor Beginn des Beschichtungsbetriebes virtuell simuliert wird.

4. Verfahren nach Anspruch 3, **dadurch gekennzeichnet, dass** das erzeugte Steuerprogramm vor Beginn des Beschichtungsbetriebes selbsttätig in Hinblick darauf überprüft wird, ob es bei der Beschichtung problemlos ausführbar ist.

5. Verfahren nach Anspruch 3 oder 4, **dadurch gekennzeichnet, dass** vor Beginn des Beschichtungsbetriebes die sich aufgrund des erzeugten Steuerprogramms ergebende Beschichtungsqualität selbsttätig beispielsweise hinsichtlich der Anzahl der Beschichtungsbahnen und/oder der Schichtdicke überprüft wird.

6. Verfahren nach einem der Ansprüche 1 bis 5, **dadurch gekennzeichnet, dass** der simulierte Beschichtungsprozess visualisiert wird.

7. Verfahren nach einem der Ansprüche 3 bis 6, **dadurch gekennzeichnet, dass** Programmtools zur Lokalisierung und Behandlung von bei der Simulierung festgestellten Fehlern, zur Bewertung der Auswirkung von Fehlern auf das Prozessergebnis und/oder zur Prozessoptimierung bereitgestellt werden.

8. Programmsteuersystem zur Steuerung einer Beschichtungsanlage für die Serienbeschichtung von unterschiedlichen Werkstücken mit unterschiedlich geformten typischen Teilbereichen mit den unterschiedlichen Werkstücken gemeinsamen Merkmalen,
bei dem die Beschichtungsbahnen einer Beschichtungsvorrichtung in Abhängigkeit von in einer Werkstückdatei (1) gespeicherten Informationen über das Werkstück errechnet werden und die Beschichtungsvorrichtung während des Beschichtungsbetriebes durch die aufgrund der Berechnung erzeugten Bewegungsprogramme (15) gesteuert wird, **gekennzeichnet durch**
einen Datenspeicher (3), in dem den einzelnen, typischen Teilbereichen der Werkstücke jeweils zugeordnete Beschichtungssteuerregeln gespeichert sind;
eine Werkstückanalysiereinrichtung (6), die die gespeicherten Werkstückdaten selbsttätig zur Identifizierung der jeweiligen Informationen über die einzelnen Teilbereiche analysiert; und eine Bewegungsbahnerzeugungseinrichtung (7), die für jeden Teilbereich aufgrund der Analyse der Werkstückdaten (1) aus den gespeicherten Steuerregeln selbsttätig die jeweils zu verwendenden Steuerregeln einschließlich der Sprühkegelformung der Beschichtungsvorrichtung auswählt, aufgrund der ausgewählten Steuerregeln und der gespeicherten Werkstückdaten selbsttätig die zumindest den Bewegungsverlauf bestimmenden Bahnsteuerprogramme für die einzelnen Teilbereiche erzeugt und die einzelnen Beschichtungssteuerprogramme selbsttätig zu dem Gesamtsteuerprogramm (15) zusammenfügt.

9. Programmsteuersystem nach Anspruch 8, **dadurch gekennzeichnet, dass** die Werkstückanalysiereinrichtung (6) von der Werkstückdatei (1) in Form von CAD-Files zugeführte Werkstückinformationen analysiert.

## Claims

1. Method of controlling a coating installation for the series coating of different workpieces with differently shaped typical part-regions with features common to the different workpieces, in which the movement paths of a coating device are computed as a function of information about the workpiece stored in a workpiece data file (1) and during the coating operation the coating device is controlled by the movement programs (15) generated on the basis of the computation, **characterised in that** coating control rules (3) are stored which are in each case assigned to the individual typical part-regions of the workpieces; the stored workpiece data (1) are analysed automatically for identification of the respective information about the individual part-regions; for each part-region the respective control rules to be used including the shaping of the conical spray pattern of the coating device are selected on the basis of the workpiece data; the path control programs (7) for the individual part-regions which at least determine the sequence of movements are generated automatically on the basis of the selected control rules (3) and the stored workpiece data (1); and the individual path control programs are combined automatically into the overall control program (15).

2. Method as claimed in Claim 1, **characterised in that** in addition to the movement control rules function control rules are also stored and selected for the path control as a function of the typical part-regions.

3. Method as claimed in Claim 1 or 2, **characterised in that** the coating process is simulated virtually before the start of the coating operation.

4. Method as claimed in Claim 3, **characterised in that** before the start of the coating operation the generated control program is automatically checked as to whether it can be executed without problems during coating.

5. Method as claimed in Claim 3 or 4, **characterised in that** before the start of the coating operation the coating quality which is produced on the basis of the generated control program is automatically checked for example with regard to the number of coating paths and/or the layer thickness.

6. Method as claimed in any one of Claims 1 to 5, **characterised in that** the simulated coating process is visualised.

7. Method as claimed in any one of Claims 3 to 6, **characterised in that** program tools are provided for location and processing of errors determined during the simulation for evaluation of the effect of errors on the result of the process and/or for optimisation of the process.

8. Program control system for controlling a coating installation for the series coating of different workpieces with differently shaped typical part-regions with features common to the different workpieces, in which the coating paths of a coating device are computed as a function of information about the workpiece stored in a workpiece data file and the coating device is controlled during the coating operation by the movement programs (15) generated on the basis of the computation, **characterised by** a data memory (3) in which coating control rules are stored which are respectively assigned to the individual typical part-regions of the workpieces; a workpiece analyser (6) which analyses the stored workpiece data automatically for identification of the respective information about the individual part-regions; and a movement path generating means (7) which for each part-region automatically selects from the stored control rules the respective control rules to be used including the shaping of the conical spray pattern of the coating device on the basis of the analysis of the workpiece data, and on the basis of the selected control rules and the stored workpiece data automatically generates the path control programs for the individual part-regions which at least determine the sequence of movements and automatically combines the individual path control programs into the overall control program.

9. Program control system as claimed in Claim 8, **characterised in that** the workpiece analyser (6) analyses workpiece information supplied from the workpiece data file (1) in the form of CAD files.

## Revendications

1. Procédé pour commander une installation de revêtement pour le revêtement en série de différentes pièces avec des zones partielles caractéristiques et de formes différentes présentant des caractéristiques communes aux différentes pièces, dans lequel les trajectoires de déplacement d'un dispositif de revêtement sont calculées en fonction d'informations, stockées dans un ficher de pièces (1), relatives à la pièce et le dispositif de revêtement est commandé pendant l'opération de revêtement par les programmes de déplacement (15) générés sur la base du calcul, **caractérisé en ce que**
des règles de commande de revêtement (3) respectivement attribuées aux zones partielles caractéristiques et individuelles des pièces sont stockées ; les données de pièce stockées (1) sont analysées automatiquement pour l'identification des informations respectives relatives aux zones partielles individuelles ;
pour chaque zone partielle, les règles de commande respectives à utiliser, y compris la forme du cône de pulvérisation du dispositif de revêtement, sont sélectionnées sur la base de l'analyse des données de pièce (1) à partir des règles de commande (3) mémorisées ;
les programmes de commande de trajectoire (7) déterminant au moins le tracé du déplacement pour les zones partielles individuelles sont générés automatiquement sur la base des règles de commande (3) sélectionnées et des données de pièce (1) stockées ; et
les programmes de commande de trajectoire individuels sont assemblés automatiquement pour former le programme de commande général (15).

2. Procédé selon la revendication 1, **caractérisé en ce que**, à côté des règles de commande de déplacement, des règles de commande de fonction pour la commande de trajectoire sont stockées et sélectionnées en supplément en fonction des zones partielles caractéristiques.

3. Procédé selon la revendication 1 ou 2, **caractérisé en ce que** le processus de revêtement est simulé virtuellement avant le début de l'opération de revêtement.

4. Procédé selon la revendication 3, **caractérisé en ce que** le programme de commande généré est vérifié automatiquement avant le début de l'opération de revêtement pour savoir s'il peut être exécuté sans problème lors du revêtement.

5. Procédé selon la revendication 3 ou 4, **caractérisé en ce que**, avant le début de l'opération de revêtement, la qualité de revêtement obtenue sur la base du programme de commande généré est vérifiée automatiquement par exemple en ce qui concerne le nombre des trajectoires de revêtement et/ou de l'épaisseur de couche.

6. Procédé selon l'une quelconque des revendications 1 à 5, **caractérisé en ce que** le processus de revêtement simulé est visualisé.

7. Procédé selon l'une quelconque des revendications 3 à 6, **caractérisé en ce que** des outils de programme sont mis à disposition pour la localisation et le traitement d'erreurs constatées lors de la simulation, pour l'analyse de la conséquence d'erreurs sur le résultat du processus et/ou pour l'optimisation du processus.

8. Système de commande de programme pour la commande d'une installation de revêtement pour le revêtement en série de différentes pièces avec des zones partielles caractéristiques de formes différentes présentant des caractéristiques communes aux différentes pièces,
dans lequel les trajectoires de revêtement d'un dispositif de revêtement sont calculées en fonction d'informations stockées dans un fichier de pièce (1) et relatives à la pièce et le dispositif de revêtement est commandé pendant l'opération de revêtement par les programmes de déplacement (15) générés sur la base du calcul, **caractérisé par**
une mémoire de données (3), dans laquelle des règles de commande de revêtement respectivement attribuées aux zones partielles individuelles caractéristiques des pièces sont stockées ;
un dispositif d'analyse de pièce (6), qui analyse les données de pièce stockées automatiquement pour l'identification des inventions respectives relatives aux zones partielles individuelles ; et un dispositif de commande de trajectoire de déplacement (7), qui sélectionne pour chaque zone partielle sur la base de l'analyse des données de pièce (1), à partir des règles de commande mémorisées, automatiquement les règles de commande respectives à utiliser, y compris la formation du cône de pulvérisation du dispositif de revêtement, et qui génère sur la base des données de commande sélectionnées et des données de pièce stockées automatiquement les programmes de commande de trajectoire, déterminant au moins le déroulement du déplacement, pour les zones partielles individuelles et assemble des programmes de commande de revêtement individuels automatiquement pour former le programme de commande global (15).

9. Système de commande de programme selon la revendication 8, **caractérisé en ce que** le dispositif d'analyse de pièce (6) analyse des informations de pièces amenées par le fichier de pièce (1) sous la forme de "CAD-Files".
